# EUROPÄISCHE PATENTSCHRIFT

(11) **EP 0 523 400 B1**
(45) Veröffentlichungstag und Bekanntmachung des Hinweises auf die Patenterteilung: **18.10.1995**
(21) Anmeldenummer: 92110481.6
(22) Anmeldetag: 22.06.1992
(51) Int. Cl.: B60J 7/06

(54) **Zusammenschiebbares Verdeck für Fahrzeuge oder Fahrzeugaufbauten**
Slidable and foldable roof for vehicles or for vehicle structure
Toit pliant et coulissant pour véhicules ou pour structure de véhicule

(30) Priorität: 02.07.1991 DE 9108115 U
(43) Veröffentlichungstag der Anmeldung: 20.01.1993
(73) Patentinhaber: ED. SCHARWÄCHTER GmbH & Co. FAHRZEUGTECHNIK, D-94491 Hengersberg (DE)
(72) Erfinder: Bremicker, Eduard, W-5630 Remscheid (DE); Gessl, Josef, W-8355 Hengersberg (DE)
(74) Vertreter: Schön, Theodor, Patent- und Zivilingenieur

(56) Entgegenhaltungen:
- EP-A- 0 069 391
- DE-A- 1 956 392

## Beschreibung

Die Erfindung bezieht sich auf ein zusammenschiebbares Verdeck für Fahrzeuge oder Fahrzeugaufbauten bzw. Container, bestehend aus zwei sich über die Länge der Fahrzeugpritsche oder des Fahrzeugaufbaues hin erstreckenden Laufschienen und einer Vielzahl an diesen vermittels Rollenwagen und Stützstreben längsveschiebbar und höhenveränderlich abgestützter eine Verdeckplane unterstützenden Spriegeln, wobei die Stützstreben jeweils paarweise zu Gruppen zusammengefasst und gelenkig untereinander verbunden sind sowie jeweils paarweise einen Spriegel tragen und wobei sich die gelenkig miteinander verbundenen Stützstreben jedes Paares bei geschlossenem Verdeck in einer wenigstens annähernden Strecklage befinden.

Zusammenschiebbare Verdecke der vorstehend gekennzeichneten Bauart sind für Lastkraftwagen und Anhänger bzw. Fahrzeugaufbauten oder Container bekannt, und dienen dazu, ein Öffnen des Verdeckes für die Beladung des Fahrzeuges oder Containers von oben her zu vereinfachen und zu erleichtern. Da auf der einen Seite die maximal zulässige Gesamthöhe von Fahrzeugaufbauten oder Containern im wesentlichen zum einen durch Vorschriften und zum anderen durch vorhandene Durchfahrten und dergl. mehr oder minder unabänderliche Gegebenheiten vorgezeichnet ist, auf der anderen Seite aber innerhalb der maximalen Gesamthöhe des Fahrzeuges bzw. Containers eine möglichst große nutzbare Innenhöhe des Transportraumes angestrebt werden muß, ist eine möglichst niedrig bauende Ausbildung des in seiner Schließlage befindlichen Verdeckes anzustreben.

Die EP-A-0 069 391 zeigt bereits ein Verdeck gemäß dem Oberbegriff des Anspruchs 1.

Der liegt daher die technische Aufgabe zugrunde ein Erfindung zusammenschiebbares Verdeck der eingangs bezeichneten Bauart dahingehend zu verbessern, daß der Vorteil einer extrem niedrigen Bauweise des geschlosenen Verdeckes ohne nachteilige Einschränkung seiner Verstellbarkeit erreicht und dabei insgesamt der Aufwand für die Herstellung des Verdeckes möglichst gering gehalten wird. Darüberhinaus soll gleichzeitig auch eine Vereinfachung wesentlicher Bauelemente des Verdeckes ermöglicht werden.

Diese Aufgabe wird erfindungsgemäß im wesentlichen dadurch gelöst, daß die Stützstreben an den die Führungsschienen umgreifenden und zu diesen parallelen Seitenwangen der Rollenwagen angelenkt sind. Die Anlenkung der Stützstreben an den Seitenwangen der Rollenwagen ermöglicht es, die Anlenkstellen der Stützstreben unterhalb der oberen Oberflächenebene des Führungsschienenprofiles anzuordnen, derart, daß bei geschlossenem Verdeck zum einen die von den Stützstreben getragenen Spriegel auf der oberen Oberfläche des Führungsschienenprofiles aufliegen und die beiden zu einem Paar gehörigen Stützstreben trotzdem eine das Falten und Aufstellen der Strebenpaare gewährleistende gegenseitige Winkelstellung einnehmen können. In Verbindung damit wird gleichzeitig auch eine wesentliche Vereinfachung der Ausbildung der Rollenwagen möglich, die nunmehr durch ein einfaches U-förmiges Blechpressteil oder einen Abschnitt eines U-Profiles gebildet sein können.

Je nach Auslegung des Verdeckes und insbesondere dessen Führungsschienen bzw. der Steghöhe des die Stützstreben bildenden Flachmaterials kommen verschiedene Höhenlagen der Anlenkachsen der Stützstreben an den Seitenwangen der Rollenwagen in Betracht, wobei die Anlenkachsen der Stützstreben mit den Rollenachsen der Rollenwagen in einer gemeinsamen Ebene oder aber unterhalb der Ebene der durch Rollenachsen der Rollenwagen verlaufenden Ebene angeordnet sein können. Für die bevorzugterweise zur Anwendung kommende Anordnung der Anlenkachse unterhalb der durch die Rollenachsen laufenden Ebene ist dann weiter vorgesehen, daß entweder die Seitenwangen der Rollenwagen über die Aufstandsebene der Rollen der Rollenwagen an den Führungsschienen hinaus nach unten verlängert sind, wobei die über die Aufstandsebene der Rollen der Rollenwagen an den Führungsschienen hinaus nach unten gerichteten Verlängerungen mit den Seitenwangen der Rollenwagen einteilig ausgebildet sind, oder aber, was sich besonders bei in kleineren Stückzahlen zu fertigenden Verdecken empfiehlt, die über die Aufstandsebene der Rollen der Rollenwagen an den Führungsschienen hinaus nach unten reichenden Verlängerungen der Seitenwangen der Rollenwagen durch auf diese aufgesetzte Traglaschen oder dergl. Formstücke gebildet sind.

In bevorzugter Ausgestaltung der Erfindung ist weiter vorgesehen, daß die Stützstreben jedes Paares wechselseitig an die innere und äußere Seitenwange jeweils eines Rollenwagens angeschlossen sind, wobei zwecks möglichst schmalbauender Ausführung die Anlenkungen der Stützstreben an den Seitenwangen bzw. den Verlängerungen der Seitenwangen der Rollenwagen durch Schraubenbolzen mit Senkkopf gebildet sind und die Schraubenbolzen mit ihrem Senkkopf in einer an der der Innenseite der Seitenwangen bzw. deren Verlängerungen vorgesehenen Ansenkung einliegen.
In einer abgewandelten Ausführungsform kann jedoch auch vorgesehen sein, daß die Stützstreben jedes Paares an einer, insbesondere der inneren Seitenwange jeweils eines Rollenwagens angeschlossen sind, wobei die beiden Stützstreben vermittels einer Beilagscheibe, vorzugsweise aus einem Lagermaterial, aneinander anliegen und eine der beiden nebeneinanderliegend angelenkten Stützstreben oberhalb ihrer Anlenklagerung seitlich ausgekröpft ist.

Ferner kann bezüglich der Gestaltung der Lagerachsen für die Stützstreben wahlweise auch vorgesehen sein, daß die Stützstreben vermittels einen Flachkopf aufweisender Bund-Schraubenbolzen an den Seitenwangen der Rollenwagen gelagert sind.

Für die Ausbildung der Lagerung der Stützstreben an den Rollenwagen kann unabhängig von der Einzelausgestaltung der Rollenlagerung vorgesehen sein, daß die Stützstreben vermittels Bundbuchsen auf den sie an den Seitenwangen der Rollenwagen lagernden Schraubenbolzen belagert sind.

Bei einer wechselseitig innen und außenliegender Anlenkung der Stützstreben an den Rollenwagen ist neuerungsgemäß weiter vorgesehen, daß die gelenkigen Verbindungen der beiden zu einem Paar gehörigen Stützstreben durch einen die Breite der Rollenwagen überspannenden Schraubenbolzen und eine diesen umgebende, gegebenenfalls zweiteilige Distanzhülse gebildet sind. In Verbindung mit einer solchen Ausbildung der glenkigen Verbindung zweier einander zu einem Paar ergänzender Stützstreben kann nach einer vorteilhaften weiteren Ausgestaltung vorgesehen sein, daß in die gelenkige Verbindung der beiden Stützstreben eines Paares eine Rolle eingeschaltet ist, die bei in der Schließlage befindlichem Verdeck auf der oberen Oberfläche des Laufschienenprofiles aufliegt. Die Rolle ist dabei zweckmäßigerweise einerseits gegen eine den Schraubenbolzen umgebende Distanzhülse und andererseits vermittels einer Anzahl von Scheiben gegen die innenliegende Seitenfläche der einen Stützstrebe abgestützt.

Schließlich wird noch ein Merkmal der Erfindung darin gesehen, daß die an der einen, insbesondere der jeweils innenliegenden Stützstrebe eines Paares befestigte, insbesondere durch Winkelprofilabschnitte gebildete :Auflager für die Spriegel den Abstand zwischen den wechselseitig innen-und außenliegend an den Rollenwagen angelenkten Stützstreben übergreifen.

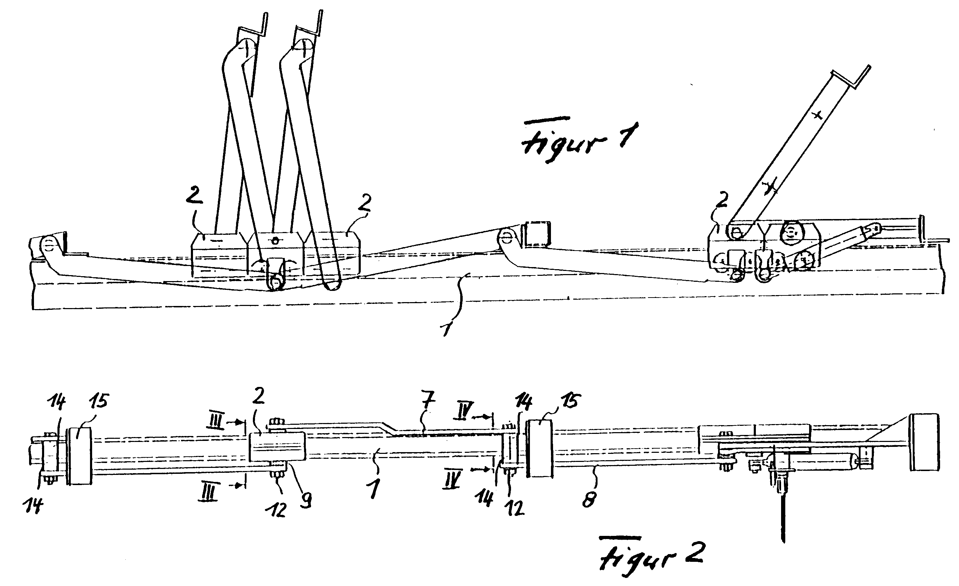

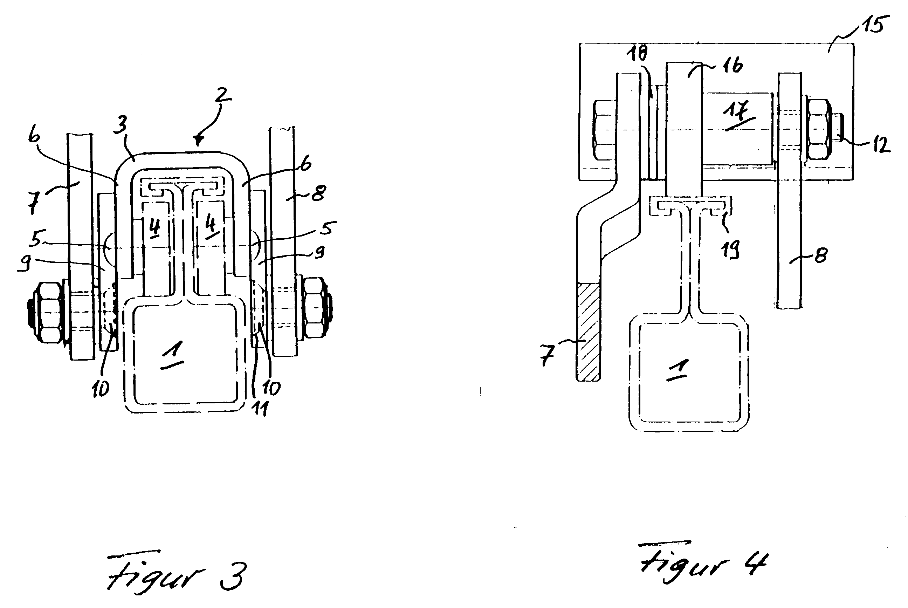

Die Erfindung ist in der nachfolgenden beispielsbeschreibung anhand eines in der Zeichnung dargestellten .Ausführungsbeispieles im Einzelnen beschrieben. In der Zeichung zeigt die
- Figur 1: eine Ausschnittweise Seitenansicht eines zusammenschiebbaren Verdeckes;
- Figur 2: eine Drautsicht zu Figur 1;
- Figur 3: einen Teilschnitt durch das Verdeck entlang der Linie III-III in Figur 2;
- Figur 4: einen Teilschnitt durch das Verdeck entlang der Linie IV-IV in Figur 2;
Die in der Zeichnung nicht im einzelnen dargestellte Ladepritsche eines Lastkraftwagens bzw. die oberseitige Öffnung eines Fahrzeugaufbaues oder eines Containers sind über ihre Länge hin von einem Paar entlang ihrer beiden Längsseiten angeordneter Führungsschienen 1 überspannt. Die Führungsschienen 1 weisen, wie insbesondere aus den Darstellungen der Figuren 3 und 4 ersichtlich, jeweils ein auf ein kastenförmiges Tragprofil aufgesetztes im Querschnitt I-förmiges Führungsprofil auf. An den Führungsschienen 1 sind längsverfahrbar Rollenwagen 2 geführt, welche ein im wesentlichen U-förmiges Rollenwagenchassis 3 und zwei Paare von Laufrollen 4 aufweisen, wobei die Laufrollen 4 jeweils paarweise um eine Rollenachse 5 drehbar und einander gegenüberliegend an den Rollenwagenseitenwangen 6 gelagert sind. An jedem Rollenwagen 2 sind jeweils zwei Stützstreben 7 und 8 um eine zu den Rollenachsen 5 parallele Achse schwenkbar angelenkt. An ihrem anderen Ende sind die beiden einander jeweils zu einem Paar ergänzenden Stützstreben 7 und 8 gelenkig untereinander verbunden.
Bei dem in der Zeichnung dargestellten Ausführungsbeispiel sind die beiden Stützstreben 7 und 8 bezüglich der Fahrzeuglängsmitte jeweils wechselseitig innen- und außenliegend am Rollenwagen 2 angelenkt, wobei die Seitenwangen 6 der Rollenwagen 2 vermittels einer aufgesetzten Lasche 9 nach unten verlängert und die Stützstreben 7 und 8 jeweils vermittels eines durch eine Senkkopfschraube 10 gebildeten Lagerzapfens an den Laschen 9 angelenkt sind. Den Senkkopfschrauben 10 sind entsprechende Ansenkungen 11 in den Laschen 9 zugeordnet, um eine schmalbauende Gestaltung der Lagerungen der Stützstreben 7 und 8 zu erreichen. Dabei ist, wie insbesondere aus der Figur 2 ersichtlich, jeweils eine innenliegend am einen Rollenwagen 2 angelenkte Stützstrebe 7 mittels eines die Breite der Rollenwagen 2 überspannenden Schraubenbolzens 12 gelenkig mit einer am anderen bzw. folgenden Rollenwagen außenseitig angelenkten Stützstrebe 8 verbunden. Der die Gelenkverbindung zwischen den beiden Stützstreben 7 und 8 bildende Schraubenbolzen 12 ist gemäß der Ausführungsform nach Figur 2 in einer zweiteilig ausgebildeten, den Abstand zwischen den beiden Stützstreben 7 und 8 sichernden Distanzhülse 14 aufgenommen. Ferner ist bei der Ausführungsform nach Figur 2 an das freie, die durch den Schraubenbolzen 12 gebildete Gelenkverbindung der beiden Stützstreben 7 und 8 überragende Ende der innenliegend angelenkten Stützstrebe 7 ein durch einen Zuschnitt eines Winkelprofiles gebildetes Auflager 15 für einen durch ein Vierkant-Profilmaterial gebildeten Spriegel angeschlosen, dessen Länge so bemessen ist, daß es den Abstand zwischen den beiden Stützstreben 7 und 8 überbrückt und diese beidseitig noch überragt. Abweichend von dem in der Figur 2 gezeigten Ausführungsbeispiel ist bei der Ausführungsform nach Figur 4 vorgesehen, daß in die Gelenkverbindung der beiden einander zu einem Paar ergänzenden Stützstreben 7 und 8 eine Rolle 16 eingeschaltet ist, welche bei geschlossenem Verdeck auf der oberen Oberfläche der Führungsschiene 1 aufliegt. Die Rolle 16 liegt dabe einerseits gegen den einen Teil 17 einer Distanzhülse und andererseits gegen ein Paket von Scheiben 18 an und ist insgesamt auf dem Schraubenbolzen 12 gelagert.

## Patentansprüche

1. Zusammenschiebbares Verdeck für Fahrzeuge oder Fahrzeugaufbauten bzw. Container, bestehend aus zwei sich über die Länge der Fahrzeugpritsche oder des Fahrzeugaufbaues hin erstreckenden Führungsschienen (1) und einer Vielzahl an diesen vermittels Rollenwagen (2) und Stützstreben (7, 8) längsverschiebbar und höhenveränderlich abgestützter eine Verdeckplane unterstützenden Spriegeln, wobei die Stützstreben (7 und 8) jeweils paarweise zu Gruppen zusammengefasst und gelenkig untereinander verbunden sind sowie jeweils paarweise einen Spriegel tragen und wobei sich die gelenkig miteinander verbundenen Stützstreben (7 und 8) jedes Paares bei geschlossenem Verdeck in einer wenigstens annähernden Strecklage befinden, dadurch gekennzeichnet, daß die beiden Stützstreben (7 und 8) jedes einen Verdeckspriegel tragenden Stützstrebenpaares (7,8) wechselseitig und unterhalb deren Oberkanten an die innere und äußere Seitenwange (6) jeweils eines Rollenwagens (2) angeschlossen sind und daß die gelenkigen Verbindungen der beiden zu einem Paar gehörigen Stützstreben (7 und 8) durch einen die Breite der Rollenwagen (2) überspannenden Schraubenbolzen (12) und eine diesen umgebende, gegebenenfalls zweiteilige Distanzhülse (14) gebildet sind.

2. Verdeck nach Anspruch 1, dadurch gekennzeichnet, daß die Anlenkachsen der Stützstreben (7 und 8) mit den Rollenachsen (5) der Rollenwagen (2) in einer gemeinsamen Ebene angeordnet sind.

3. Verdeck nach Anspruch 1, dadurch gekennzeichnet, daß die Anlenkachsen der Stützstreben (7 und 8) unterhalb der Ebene der durch Rollenachsen (5) der Rollenwagen (2) verlaufenden Ebene angeordnet sind.

4. Verdeck nach Anspruch 1 und 3, dadurch gekennzeichnet, daß die Seitenwangen (6) der Rollenwagen (2) über die Aufstandsebene der Rollen (4) der Rollenwagen (2) an den Führungsschienen (1) hinaus nach unten verlängert sind.

5. Verdeck nach Anspruch 1 und 4, dadurch gekennzeichnet, daß die über die Aufstandsebene der Rollen (4) der Rollenwagen (2) an den Führungsschienen (1) hinaus nach unten gerichteten Verlängerungen mit den Seitenwangen (6) der Rollenwagen (2) einteilig ausgebildet sind.

6. Verdeck nach Anspruch 1 bis 4, dadurch gekennzeichnet, daß die über die Aufstandsebene der Rollen (4) der Rollenwagen (2) an den Führungsschienen (1) hinaus nach unten reichenden Verlängerungen der Seitenwangen (6) der Rollenwagen (2) durch auf diese aufgesetzte Traglaschen (9) oder dergl. Formstücke gebildet sind.

7. Verdeck nach einem oder mehereren der voraufgehenden Ansprüche 1 bis 6, dadurch gekennzeichnet, daß die Anlenkungen der Stützstreben (7 und 8) an den Seitenwangen (6) bzw. den Verlängerungen (9) der Seitenwangen (6) der Rollenwagen (2) durch Schraubenbolzen mit Senkkopf gebildet sind, wobei die Schraubenbolzen mit ihrem Senkkopf in einer an der der Innenseite der Seitenwangen (6) bzw. deren Verlängerungen (9) vorgesehenen Ansenkung einliegen.

8. Verdeck nach einem oder mehreren der vorasufgehenden Ansprüche 1 bis 7, dadurch gekennzeichnet, daß in die gelenkige Verbindung der beiden Stützstreben (7 und 8) eines Paares eine Rolle (16) eingeschaltet ist, die bei in der Schließlage befindlichem Verdeck auf der oberen Oberfläche des Laufschienenprofiles aufliegt.

9. Verdeck nach Anspruch 8, dadurch gekennzeichnet, daß die Rolle (16) einerseits gegen eine den Schraubenbolzen (12) umgebende Distanzhülse (17) und andererseits vermittels einer Anzahl von Scheiben (18) gegen die innenliegende Seitenfläche der einen Stützstrebe (7) abgestützt ist.

10. Verdeck nach einem oder mehreren der voraufgehenden Ansprüche 1 bis 9, dadurch gekennzeichnet, daß an der einen, insbesondere der jeweils innenliegenden Stützstrebe (7) eines Paares befestigte, insbesondere durch Winkelprofilabschnitte gebildete Auflager (15) für die Spriegel den Abstand zwischen den wechselseitig innen-und außenliegend an den Rollenwagen (2) angelenkten Stützstreben (7 und 8) übergreifen.

11. Verdeck nach einem oder mehreren der voraufgehenden Ansprüche 1 bis 10, dadurch gekennzeichnet, daß die Rollenwagen durch einen U-förmigen Profilmaterialabschnitt bzw. eine U-förmig gestaltetes Blechpressteil gebildet sind.

## Claims

1. Collapsible roof for vehicles or vehicle superstructures or containers, consisting of two guide rails (1) extending over the length of the vehicle body or vehicle superstructure and a plurality of hoops which are supported thereon in a longitudinally displaceable and vertically variable manner by means of roller carriages (2) and supporting struts (7, 8), wherein the supporting struts (7 and 8) are combined in pairs to form groups and are articulated to one another in each case and each carry a hoop in pairs and wherein the mutually articulated supporting struts (7 and 8) of each pair are located in an at least substantially extended position when the roof is closed, characterised in that the two supporting struts (7 and 8) of each supporting strut pair (7, 8) carrying a roof hoop are attached alternately and beneath the upper edges thereof to the internal and external lateral plate (6) of a respective roller carriage (2) and in that the articulations of the two supporting struts (7 and 8) pertaining to a pair are formed by a threaded bolt (12) spanning the width of the roller carriages (2) and an optionally two-part spacer sleeve (14) surrounding them.

2. Roof according to claim 1, characterised in that the articulating axes of the supporting struts (7 and 8) are arranged in a common plane with the roller axes (5) of the roller carriages (2).

3. Roof according to claim 1, characterised in that the articulating axes of the supporting struts (7 and 8) are arranged beneath the plane of the plane extending through roller axes (5) of the roller carriages (2).

4. Roof according to claims 1 and 3, characterised in that the lateral plates (6) of the roller carriages (2) are extended downwardly beyond the contact plane of the rollers (4) of the roller carriages (2) on the guide rails (1).

5. Roof according to claims 1 and 4, characterised in that the lengthening members which are directed downwardly beyond the contact plane of the rollers (4) of the roller carriages (2) on the guide rails (1) are formed integrally with the lateral plates (6) of the roller carriages (2).

6. Roof according to claims 1 to 4, characterised in that the lengthening members of the lateral plates (6) of the roller carriages (2) extending downwardly beyond the contact plane of the rollers (4) of the roller carriages (2) on the guide rails (1) are formed by carrying lugs (9) or similar shaped members placed thereon.

7. Roof according to one or more of the preceding claims 1 to 6, characterised in that the articulations of the supporting struts (7 and 8) are formed on the lateral plates (6) or the lengthening members (9) of the lateral plates (6) of the roller carriages (2) by threaded bolts with a countersunk head, the threaded bolts resting with their countersunk head in a recess provided on the interior of the lateral plates (6) or the lengthening members (9) thereof.

8. Roof according to one or more of the preceding claims 1 to 7, characterised in that, in the articulation of the two supporting struts (7 and 8) of a pair there is inserted a roller (16) which rests on the upper surface of the running rail profile when the roof is located in the closed position.

9. Roof according to claim 8, characterised in that the roller (16) is supported on the one hand against a spacer sleeve (17) surrounding the threaded bolt (12) and on the other hand by means of a number of discs (18) against the internal lateral face of one supporting strut (7).

10. Roof according to one or more of the preceding claims 1 to 9, characterised in that supports (15) for the hoops, fastened on one, in particular the inner respective supporting strut (7) of a pair and formed, in particular, by angle profile portions, cover the distance between the supporting struts (7 and 8) articulated alternately internally and externally on the roller carriages (2).

11. Roof according to one or more of the preceding claims 1 to 10, characterised in that the roller carriages are formed by a U-shaped profile material portion or a sheet metal pressed part configured in the shape of a U.

## Revendications

1. Capote pliable et coulissante pour véhicules ou structures de véhicules, respectivement containers, qui se compose d'une part de deux rails de guidage (1) s'étendant sur toute la longueur de la plateforme ou de la structure du véhicule et d'autre part d'une multitude d'arceaux qui portent une bâche et s'appuient dans les rails de guidage par l'intermédiaire de chariots roulants (2) et d'entretoises (7), (8) en étant déplaçables longitudinalement et réglables en hauteur, où les entretoises assemblées par paires sont articulées entre elles, où chaque paire d'entretoises porte un arceau et où les entretoises de chaque paire sont en position presqu'étendue lorsque la capote est fermée, *caractérisée en ce que* les entretoises (7), (8) de chaque paire d'entretoises portant un arceau de la capote sont articulées alternativement sur les parois intérieure et extérieure (6) des chariots roulants (2), en dessous du chant supérieur desdits chariots, et *en ce que* l'assemblage articulé des entretoises (7), (8) formant une paire sur les chariots roulants (2) est constitué par un boulon fileté (12) s'étendant au-delà de la longueur du chariot roulant et d'une douille d'écartement (14), éventuellement composée de deux parties, entourant ledit boulon fileté.

2. Capote pliable et coulissante selon la revendication 1 *caractérisée en ce que* les axes d'articulation des entretoises (7), (8) sur les chariots roulants sont disposés dans le même plan que les axes (5) des rouleaux desdits chariots roulants (2).

3. Capote pliable et coulissante selon la revendication 1 *caractérisée en ce que* les axes d'articulation des entretoises (7), (8) sur les chariots roulants sont disposés en dessous du plan passant par les axes (5) des rouleaux desdits chariots roulants (2).

4. Capote pliable et coulissante selon les revendications 1 et 3 *caractérisée en ce que* les parois latérales (6) des chariots roulants (2) se prolongent vers le bas au-delà du plan d'appui des rouleaux (4) des chariots roulants (2) sur les rails de guidage (1).

5. Capote pliable et coulissante selon les revendications 1 et 4 *caractérisée en ce que* les prolongements des parois latérales (6) vers le bas, au-delà du plan d'appui des rouleaux (4) des chariots roulants (2) sur les rails de guidage (1), forment une pièce unique avec lesdites parois latérales.

6. Capote pliable et coulissante selon les revendications 1 et 4 *caractérisée en ce que* les prolongements des parois latérales (6) vers le bas, au-delà du plan d'appui des rouleaux (4) des chariots roulants (2) sur les rails de guidage (1), sont constitués par des languettes (9) ou des pièces profilées similaires montées sur lesdites parois latérales (6).

7. Capote pliable et coulissante selon l'une ou plusieurs des revendications 1 à 6 *caractérisée en ce que* les articulations des entretoises (7), (8) sur les parois latérales (6), respectivement leurs prolongements (9), des chariots roulants (2) sont constituées par des boulons filetés à tête fraisée et *en ce que* la tête fraisée des boulons filetés coopère avec un chanfrein prévu dans la face intérieure des parois latérales (6), respectivement de leurs prolongements (9).

8. Capote pliable et coulissante selon l'une ou plusieurs des revendications 1 à 7 *caractérisée par* un galet (16) qui est inséré dans l'articulation assemblant par paire deux entretoises (7), (8) et qui est au contact de la surface supérieure du profilé constituant le rail de guidage lorsque la capote est fermée.

9. Capote pliable et coulissante selon la revendication 8 *caractérisée en ce que* le galet (16) s'appuie d'une part sur une douille d'écartement (17) entourant le boulon fileté (12) et d'autre part, par l'intermédiaire d'un certain nombre de disques (18), sur la face intérieure de l'une des entretoises (7).

10. Capote pliable et coulissante selon l'une ou plusieurs des revendications 1 à 9 *caractérisée en ce que* des supports d'arceaux (15) constitués en particulier par des segments de cornière et fixés sur l'une des entretoises de chaque paire, plus particulièrement l'entretoise intérieure (7), recouvrent l'espace entre les entretoises (7), (8) articulées alternativement sur la paroi intérieure et la paroi extérieure des chariots roulants (2).

11. Capote pliable et coulissante selon l'une ou plusieurs des revendications 1 à 10 *caractérisée en ce que* les chariots roulants (2) sont constitués d'un segment de profilé en forme de U, respectivement d'une pièce emboutie en tôle en forme de U.
